# EUROPEAN PATENT APPLICATION

(11) **EP 1 471 618 A2**
(43) Date of publication of application: **27.10.2004**
(21) Application number: 04009698.4
(22) Date of filing: 23.04.2004
(51) Int. Cl.: H02J 7/00

(54) **Voltage equalizer for capacitors**

(30) Priority: 23.04.2003 JP 2003118657
(71) Applicant: FUJI JUKOGYO KABUSHIKI KAISHA, Tokyo (JP); NAGANO JAPAN RADIO CO., LTD., Nagano-shi, Nagano (JP)
(72) Inventor: Anzawa, Seiichi, Shinjuku-ku, Tokyo (JP); Matsui, Fujio, Shinjuku-ku, Tokyo (JP); Nishizawa, Hiroshi, machi, Nagano-shi, Nagano (JP)
(74) Representative: Grünecker, Kinkeldey, Stockmair & Schwanhäusser Anwaltssozietät

(57) **Abstract**

Coils, switching elements, and capacitors are connected in series to each other to form a plurality loop circuits, the loop circuits are divided into a plurality of blocks each including an arbitrary number of loop circuits. A control unit collectively controls the switching elements of the respective blocks to be ON by a block basis by selectively supplying pulse signals of different timings to the blocks, and makes settings or controls so that the polarities of the coils of the blocks alternately reverse.

## Description

### Background of the Invention

### 1. Field of the Invention

The present invention relates to a voltage equalizer for capacitors which equalizes terminal voltages of a plurality of capacitors connected in series.

### 2. Description of the Related Art

Generally, into an electric vehicle which runs by a motor or a hybrid vehicle which runs by using both engine and motor, a battery including a number of capacitors connected in series is loaded. The battery is provided with a voltage equalizer which equalizes terminal voltages of the capacitors in consideration of securing a charging capacity, long life of each capacitor, and safety, etc.

In the related-art, a voltage equalizer and a voltage equalizationmethodamong apluralityof capacitors or converters connected in series, disclosed in United States Patent No. 5821729, has been known. In the voltage equalizer, a plurality of capacitors connected in series and a transformer having a plurality of coils is provided, the coils are connected to the respective capacitors via a plurality of switches, and the terminal voltages of the capacitors are equalized by switching the switches.

However, the abovementionedrelated-art voltage equalizer and method have the following problems.

First, when the magnetizing force with respect to the core of the transformer is one-directional, the change width of the magnetic flux density of the core becomes small and results in lowering the utilization ratio. Therefore, it is necessary to increase the cross-sectional area of the core, and this results in an increase in size of the transformer, and another measure must be taken by a resetting circuit, etc.

Second, in a case where the magnetizing force with respect to the core of the transformer is bidirectional, a plurality of switches becomes necessary for each capacitor, and this increase in the number of parts results in a cost increase, complicated structure, and an increase in size.

### Summary of the Invention

An object of the present invention is to provide a voltage equalizer for capacitors which eliminates problems that cause an increase in size of the transformer or require another measure to be taken for the one-directional magnetizing force of the transformer, and to realize a cost reduction along with a reduction in the number of parts and simplification and downsizing of the voltage equalizer.

For achieving the foregoing object, the present invention provides a voltage equalizer 1x for capacitors which equalizes the terminal voltages Ea, Eb, Ec... of a plurality of capacitors Ba, Bb, Bc... connected in series, the voltage equalizer comprising:
a transformer 2 with aplurality of coils 2aa... corresponding to the capacitors Ba...;
a plurality of switching elements 3aa... corresponding to the respective coils 2aa..., wherein the respective coils 2aa..., the respective switching elements 3aa... and the respective capacitors Ba.- are connected in series to each other to form a plurality of loop circuits Raa..., and the loop circuits Raa... are divided into a plurality of blocks Ca, Cb... each including an arbitrary number of loop circuits 2aa... or 2ba...; and
a control unit 4 collectively controlling the switching elements 3aa... of the respective blocks Ca... to be ON by a block Ca... basis by selectively supplying pulse signals S1... of different timings to the respective blocks Ca... and making settings or controls so that polarities of the coils 2aa... of the blocks Ca... alternately reverse.

In this case, according to a preferable embodiment, coils 2aa... can be connected in reverse in advance so that the polarities of corresponding coils 2aa... alternately reverse. Furthermore, in a case where terminal voltages of capacitors Ba... of blocks Ca... that have switching elements 3aa... which are controlled to be ON n-th are defined as Eₙ, the number of windings of the coils 2aa... is defined as Nₙ, an ON time of the switching elements 3aa... is defined as Tₙ, terminal voltages of the capacitors Bc... of blocks Cb... having switching elements 3ba... that are controlled to be ON n+1-th are defined as Eₙ₊₁, the number of windings of the coils 2ba... is defined as Nₙ₊₁, and an ON time of the switching elements 3ba... is defined as Tₙ₊₁, the condition of Eₙ/Eₙ₊₁ = (Nₙ/Nₙ₊₁)· (Tₙ₊₁/Tₙ) is satisfied. The control unit 4 monitors the terminal voltages Ea... of the capacitors Ba..., and when the scattering of the terminal voltages Ea... falls within a predetermined range, the control unit 4 can control to stop ON-control of the switching elements 3aa... or shorten the ON time Tₙ..., and also, the control unit monitors currents flowing in the capacitors Ba..., and when currents equal to or more than a predetermined value flow in the capacitors Ba..., the control unit can control to stop ON-control of the switching elements 3aa... or shorten the ON time T_{n...}. Furthermore, each capacitor Ba... can be formed of one cell or a plurality of cells. The capacitors Ba... are preferably used for a battery B to be loaded into an electric vehicle which runs by a motor or a hybrid vehicle which runs by using both engine and motor.

On the other hand, as a voltage equalizer ly relating to another embodiment, it is also possible that a plurality of modules M1, M2... each has a transformer 2 with a plurality of coils 2aa... corresponding to the respective capacitors Ba... and a plurality of switching elements 3aa... corresponding to the respective coils 2aa..., wherein the coils 2aa..., the switching elements 3aa..., and the capacitors Ba... are connected in series to each other to form a plurality of loop circuits Raa..., and the loop circuits Raa... are divided into a plurality of blocks Ca... each including an arbitrary number of loop circuits Raa.... The capacitors Ba.- of the modules M1... are connected in series to each other, and equalizing coils 5... are provided for the transformers 2... in the modules M1... so that the equalizing coils 5 are connected in parallel to each other.

### Brief Description of the Drawings

Fig. 1 is a circuit diagram of a voltage equalizer relating to a first embodiment of the present invention;
Fig. 2 is a partially extracted circuit diagram in a case where an FET is used in the same voltage equalizer;
Fig. 3 shows time charts of signals of respective parts in the same voltage equalizer;
Fig. 4 is a circuit diagram of a voltage equalizer relating to a modified example of the first embodiment;
Fig. 5 shows time charts of pulse signals to be used in the voltage equalizer relating to the modified example of Fig. 4;
Fig. 6 is a voltage equalization characteristics diagram of a voltage equalizer shown in Fig. 7;
Fig. 7 is a circuit diagramof the voltage equalizer relating to another modified example of the first embodiment;
Fig. 8 is a circuit diagram of a voltage equalizer relating to still another modified example of the first embodiment; and
Fig. 9 is a circuit diagram of a voltage equalizer relating to a second embodiment of the present invention.

### Detailed Description of the Invention

Next, preferable embodiments relating to the present invention are illustrated and described in detail with reference to the drawings.

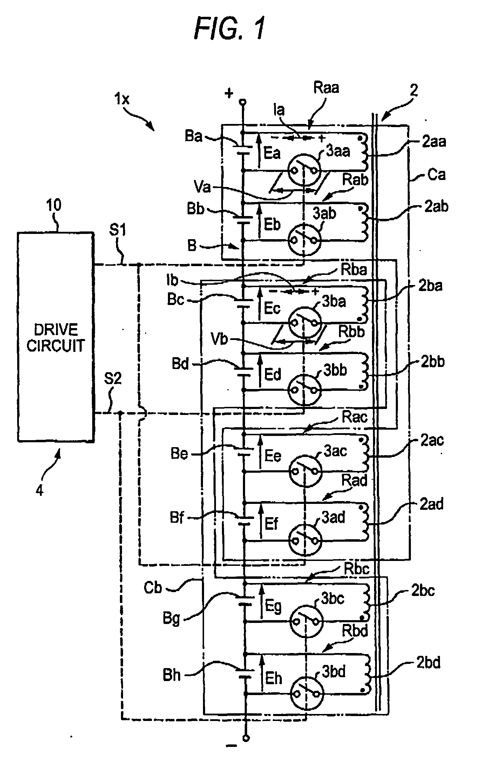

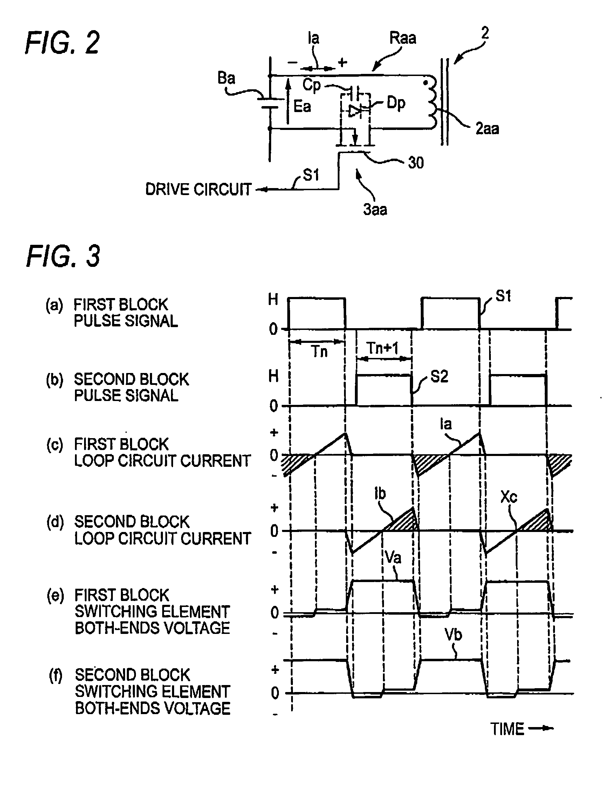

First, the construction of a voltage equalizer 1x relating to a first embodiment. is described with reference to Fig. 1 and Fig. 2.

In the figures, B indicates a battery, more specifically, a battery to be loaded into an electric vehicle which runs by a motor or a hybrid vehicle which runs by using both engine and .. motor. The battery B is constructed by connecting a plurality of capacitors Ba, Bb, Bc... Bh in series, and for the capacitors Ba..., various capacitors including an ionbattery such as a lithium ion battery, an electric double layer capacitor, etc., can be used. The example shows the case where a lithium ion battery is used. The capacitors Ba... may be formed of one cell, or a plurality of cells, for example, a plurality of cells connected in series or parallel, or a combination of cells connected in series and parallel. The voltage equalizer 1x which equalizes terminal voltages Ea, Eb, Ec... Eh of the capacitors Ba, Bb, Bc... Bh is connected to the battery B,.

The voltage equalizer 1x has a transformer 2 having an iron core, and the transformer 2 has coils 2aa, 2ab, 2ac, 2ad, 2ba, 2bb, 2bc, and 2bd as many as the capacitors Ba.... Regarding the coils 2aa, 2ab, 2ac, and 2ad that are a part (half) of all the coils 2aa... of the transformer 2, winding start terminals are connected to positive terminal sides of the capacitors Ba, Bb, Be, and Bf, respectively, and winding end terminals are connected to negative terminal sides of the capacitors Ba, Bb, Be, and Bf via switching elements 3aa, 3ab, 3ac, and 3ad..Thereby, loop circuits Raa, Rab, Rac, and Rad corresponding to the respective capacitors Ba, Bb, Be, and Bf are constructed, and these loop circuits Raa... form one block, that is, a first block Ca. Regarding the remaining coils 2ba, 2bb, 2bc, and 2bd, winding end terminals are connected to positive terminal sides of the capacitors Bc, Bd, Bg, and Bh, respectively, and winding start terminals are connected to negative terminal sides of the capacitors Bc, Bd, Bg, and Bh via switching elements 3ba, 3bb, 3bc, and 3bd. Thereby, loop circuits Rba, Rbb, Rbc, and Rbd corresponding to the respective capacitors Bc, Bd, Bg, and Bh are constructed, and these loop circuits Rba... form one block, that is, a second block Cb. Therefore, the voltage equalizer 1x shown in Fig. 1 is divided into the two blocks Ca and Cb each of which includes four loop circuits Raa... and Rba....

In this case, an FET 30 shown in Fig. 2 can be used for the switching element 3aa (the same applies to other switching elements 3ab...). In the case using the FET 30, a drain-source section of the FET 30 is connectedbetween the winding end terminal of the coil 2aa and the negative terminal side of the capacitor Ba. In the figure, Cp and Dp indicate a parasitic capacitor and a parasitic diode generated inside the FET 30, respectively.

On the other hand, the reference numeral 4 denotes a control unit. The control unit 4 has a drive circuit 10. The drive circuit 10 outputs pulse signals S1 and S2 with frequencies of approximately several hundred kHz oscillating from a built-in pulse oscillator. One pulse signal S1 is supplied to the first block Ca to control the switching elements 3aa... to be ON, and the other pulse signal S2 is supplied to the second block Cb to control the switching elements 3ba... to be ON. In the case where the FET 30 is used for the respective switching elements 3aa... and 3ba..., the pulse signals S1 and S2 are supplied to the respective gates of corresponding FETs 30. Furthermore, waveforms of the pulse signals S1 and S2 have phases displaced from each other by 180 degrees as shown in Fig. 3(a) and Fig. 3(b). Thereby, when the switching elements 3aa... of the first block Ca are ON, the switching elements 3ba... of the second block Cb are turned OFF, and when the switching elements 3ba... of the second block Cb are ON, the switching elements 3aa... of the first block Ca are turned OFF.

Furthermore, the coils 2aa... and 2ba... of the first block Ca and the second block Cb are connected to the capacitors Ba... and Bc..., respectively, so that their polarities are reverse to eachother. Thereby, when the pulse signals S1 and S2 are supplied, the polarities of the coils 2aa... and 2ba... of the blocks Ca and Cb alternately reverse. The control unit 4 is constructed by such connection of the coils 2aa... and 2ba... in which their polarities reverse and the drive circuit 10.

As another construction of the control unit 4, it is also possible that polarity switching circuits or the like are connected between the coils 2aa... and the capacitors Ba..., and switching signals are supplied from the drive circuit 10 to these polarity switching circuits or the like to make control so that the polarities of the coils 2aa... alternately reverse. However, as in this example, by connecting in advance the coils 2ba... so that the polarities of corresponding coils reverse to each other, the polarity switching circuits or the like become unnecessary, and this provides an advantage in which the present -invention is carried out easily at low cost.

The abovementioned circuitry is set so that, in a case where the terminal voltages of capacitors Ba... of the first block Ca are defined as Eₙ, the number of windings of the coils 2aa... is defined as Nₙ, the ON time of the switching elements 3aa... is defined as Tₙ, the terminal voltages of the capacitors Bc... of the second block Cb are defined as Eₙ₊₁, the number of windings of the coils 2ba... is defined as Nₙ₊₁, and the ON time of the switching elements 3ba... is defined as Tₙ₊₁, the condition of Eₙ/Eₙ₊₁ = (Nₙ/Nₙ₊₁) · (Tₙ₊₁/Tₙ) is satisfied. Therefore, by setting Nₙ = Nₙ₊₁ and Tₙ = Tₙ₊₁, Eₙ = Eₙ₊₁ is satisfied.

Next, an operation (action) of the voltage equalizer 1 relating to the first embodiment is described with reference to Fig. 1 through Fig. 3. Fig. 3 shows time charts of signals at the respective parts of the voltage equalizer 1 shown in Fig. 1. Description is given on the assumption that the FET 30 is used for the respective switching elements 3aa....

Now, it is assumed that the switching elements 3aa... of the first block Ca are turned ON. Accordingly, loop circuit currents Ia shown in Fig. 3(c) flow in the coils 2aa, and in the transformer 2, energy for equalization is stored due to the loop circuit currents Ia except for the shaded portions. The both-ends voltages Va... of the respective switching elements 3aa... when they are ON are as shown in Fig. 3 (e). Namely, the both-ends voltages Va... become almost zero (V) in a suspension period until the switching elements 3aa... are turned ON since charges accumulated in the capacitance by the parasitic capacitors Cp of the switching elements 3aa... in the first block Ca are discharged after the switching elements 3ba... of the second block Cb immediately prior to them are turned OFF.

On the other hand, after the switching elements 3aa... of the first block Ca are turned OFF, the switching elements 3ba... of the second block Cb are turned ON, the energy stored in the transformer 2 is discharged from the coils 2ba... of the second block Cb, and charging into the capacitors Bc... is carried out. In this case, when scattering exists among the capacitors Bc, Bd, Bg, and Bh of the second block Cb, the loop circuit currents Ib... of Fig. 3 (d) except for the shaded periods concentrically flow in the capacitor Bc (or Bd, Bg, Bh) whose terminal voltage is lowest among the capacitors Bc, Bd, Bg and Bh, and accordingly, the voltage of the lowest capacitor Bc (or Bd, Bg, Bh) rises.

Furthermore, after the point at which the energy stored in the transformer 2 is completely discharged, that is, after the point Xc shown in Fig. 3(d), the switching elements 3ba... are still ON, so that in a case where scattering remains among the terminal voltages Ec, Ed, Eg, and Eh of the capacitors Bc, Bd, Bg, andBh at the point Xc, discharging and charging is carried out from capacitors with high voltages to capacitors with low voltages, whereby further voltage equalization is carried out. At this point, the loop circuit currents Ib... fall into the shaded period of Fig. 3 (d). In this case, energy is also simultaneously stored in the transformer 2, and the stored energy is discharged as charging currents into the capacitors Ba... of the first block Ca after the switching elements 3ba... are turned OFF. Namely, the ON state of the switching elements 3ba... of the second block Cb continues even after energy discharge from the transformer 2 is finished, whereby the directions of the loop circuit currents Ib... are reversed, and as in the shaded period shown in Fig. 3 (d), the loop circuit currents Ib... start flowing from the capacitors Bc... to the coils 2ba.... The reversed currents excite the transformer 2 and transfer the energy from capacitors with high terminal voltages to capacitors with low terminal voltages. In this case, at the initial stage of the shaded period, the loop currents Ia flow through the parasitic diodes Dp although the switching elements 3aa- are not turned ON. The both-ends voltages Vb... of the switching elements 3ba... of the second block Cb are show in Fig. 3(f).

Furthermore, when the switching elements 3ba... of the second block Cb are turned OFF, energy stored by a part of the reversed currents is discharged to the respective coils 2aa... of the first block Ca. At this point, charges accumulated in the capacitance of the parasitic capacitors Cp existing in the switching elements 3aa... are discharged due to the discharged loop circuit currents Ia, and when the discharge is finished, the both-ends voltages Va... in the period in which the forward currents flow in the parasitic diodes Dp... of the switching elements 3aa... are clamped to forwardvoltages (approximately, 0. 5V) of the parasitic diodes Dp. Therefore, in the waveform of Fig. 3 (c) , in the shaded period, currents flow to the parasitic diodes Dp, and by turning the switching elements 3aa... ON in this period, since the both-ends voltages Va... have become almost zero (V), a zero-voltage switching operation can be realized. Thereby, the switching loss in the ON state can be reduced, and noise caused by switching can be reduced.

On the other hand, the drive circuit 10 monitors the terminal voltages (output voltages) Ea... of the capacitors Ba... and current flowing in the capacitors Ba.... Then, when the scattering among the terminal voltages Ea... falls within a predetermined range, the drive circuit 10 controls to stop the ON-control of the switching elements 3aa... or shortens the ON time Tₙ.... Namely, in order to prevent excessive loss, when the scattering becomes smaller to some extent, lowering of the equalizing currents by shortening (or stopping) the ON time Tₙ of the switching elements 3aa... becomes effective. Thereby, a harmful effect in that loss and noise are caused by a voltage equalizing operation when the scattering among the terminal voltages (output voltages) Ea... is almost zero can be prevented.

Furthermore, the drive circuit 10 monitors the currents flowing in the capacitors Ba..., and when currents equal to or more than a predetermined value flow in the capacitors Ba..., the drive circuit 10 controls to stop the ON-control of the switching elements 3aa... or shortens the ON time Tₙ.... Thereby, the voltage equalization function can be substantially stopped when large currents flow in the capacitors Ba... connected in series and great voltage drops are caused by internal resistances of the capacitors Ba... and influence the detection of the voltages of the capacitors Ba....

Then, by alternately repeating such charging and discharging actions in the respective blocks Ca and Cb, voltage equalization among the capacitors Ba, Bb, Be... Bh is carried out.

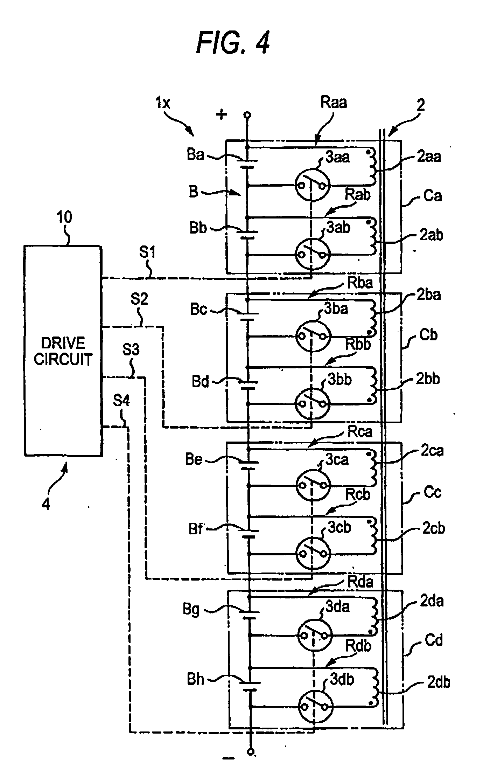

Next, a modified example of the voltage equalizer 1x relating to the first embodiment is described with reference to Fig. 4 through Fig. 8.

The voltage equalizer 1x shown in Fig. 1 shows a case of division into two blocks Ca and Cb each including four loop circuits Raa... or Rba..., however, Fig. 4, Fig. 7 and Fig. 8 show examples in which the method of division of the blocks Ca... is modified.

The modified example shown in Fig. 4 comprises a first block Ca including two loop circuits Raa and Rab, a second block Cb including two loop circuits Rba and Rbb, a third block Cc including two loop circuits Rca and Rcb, and a fourth block Cd .including two loop circuits Rda and Rdb, that is, an example of division into four blocks Ca, Cb, Cc, and Cd each including two of the loop circuits Raa..., Rba..., Rca..., or Rda... is shown. Therefore, basically, the voltage equalizer 1x relating to the present invention can be divided into a plurality of blocks Ca... each including an arbitrary number of loop circuits Raa....

Furthermore, the voltage equalizer 1x shown in Fig. 4 is set so that, when the terminal voltages of the capacitors Ba... of the first block Ca are defined as Eₙ, the number of windings of the coils 2aa... is defined as Nₙ, the ON time of the switching elements 3aa... is defined as Tₙ, the terminal voltages of the capacitors Bc... of the second block Cb are defined as Eₙ₊₁, the number of windings of the coils 2ba... is defined as Nₙ₊₁, the ON time of the switching elements 3ba... is defined as Tₙ₊₁, the terminal voltages of the capacitors Be... of the third block Cc are defined as Eₙ₊₂, the number of windings of the coils 2ca... is defined as Nₙ₊₂, the ON time of the switching elements 3ca... is defined as Tₙ₊₂, the terminal voltages of the capacitors Bg... of the fourth block Cd are defined as Eₙ₊₃, the number of windings of the coils 2da... is defined as Nₙ₊₃, and the ON time of the switching elements 3da... is defined as Tₙ₊₃, the conditions of Eₙ/Eₙ₊₁ = (Nₙ/Nₙ₊₁) · (Tₙ₊₁/Tₙ) , Eₙ₊₁/Eₙ+₂ = (Nₙ₊₁/Nₙ₊₂) · (Tₙ₊₂/Tₙ₊₁), Eₙ₊₂/Eₙ₊₃ =, (Nₙ₊₂/ Nₙ₊₃) · (Tₙ₊₃/Tₙ₊₂) are satisfied. Therefore, Nₙ through Nₙ₊₃ and Tₙ through Tₙ₊₃ that satisfy Eₙ = Eₙ₊₁ = Eₙ₊₂ = Eₙ₊₃ are determined.

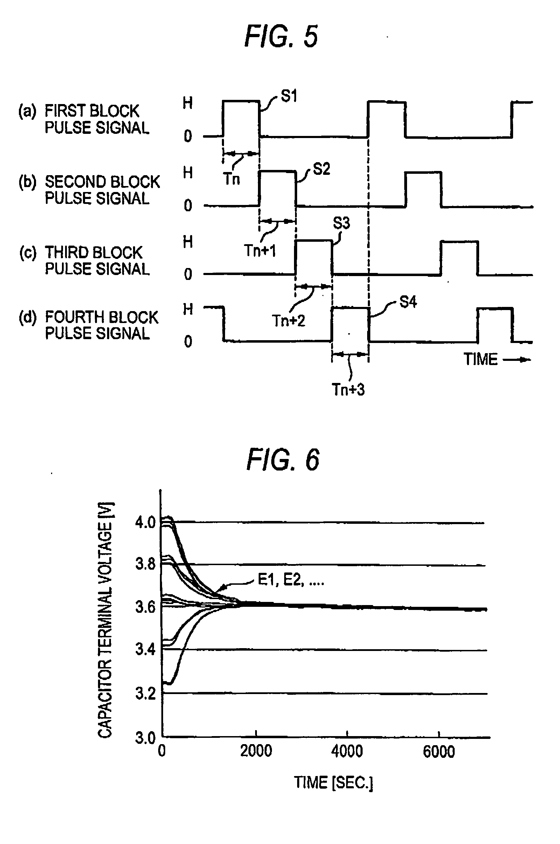

Furthermore, in the case of Fig. 4, pulse signals S1, S2, S3 and S4 of different timings as shown in Figs. 5 are supplied to the blocks Ca, Cb, Cc, and Cd, respectively, and the switching elements 3aa... of the respective blocks Ca... are collectively controlled to be ON by a block C... basis. Namely, the switching elements 3aa and 3ab of the first block Ca are controlled to be ON for only the time Tₙ by the pulse signal S1, and then, the switching elements 3ba and 3bb of the second block Cb are controlled to be ON for only the time Tₙ₊₁ by the pulse signal S2, and next, the switching elements 3ca and 3cb of the third block Cc are controlled to be ON for only the time Tₙ₊₂ by the pulse signal S3, and thereafter, the switching elements 3da and 3db of the fourth block Cd are controlled to be ON for only the time Tₙ₊₃ by the pulse signal S4. Thereafter, the operation to control the switching elements 3aa... of the first block Ca to be ON again for only the time Tₙ by the pulse signal S1 is repeated in order. Furthermore, for the ON-control in such an order, in order to make the polarities of the coils 2aa... corresponding to the capacities Ba... of the respective blocks Ca... alternately reverse, the coils 2ba, 2bb, 2da, and 2db are connected so that the winding directions thereof become reverse to those of the coils 2aa, 2ab, 2ca, and 2cb. In addition, in Fig. 4, the same portions as in Fig. 1 are attached with the same symbols to make the construction clear, and detailed description of these is omitted.

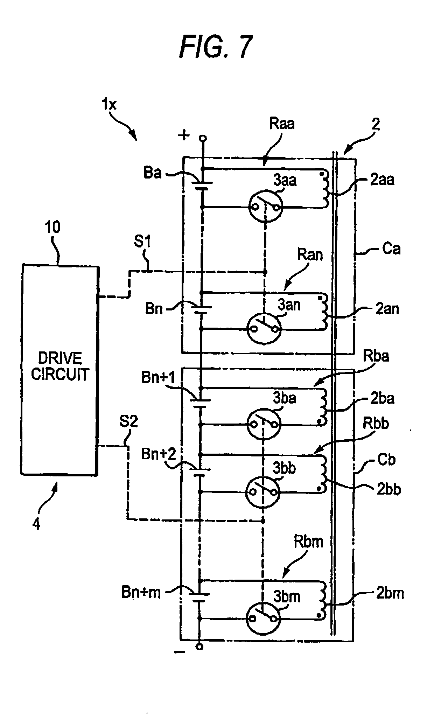

On the other hand, the modified example shown in Fig. 7 shows, in particular, a case where the number of the loop circuits Raa... in the first block Ca and the number of the loop circuits Rba... in the second block Cb are made different from each other although the point that the two blocks Ca and Cb are provided is the same as in the voltage equalizer 1x shown in Fig. 1. Even in such a case, basically, the same voltage equalizing operation as that of the voltage equalizer 1x is carried out. Fig. 6 shows the equalization characteristics when the number of loop circuits Raa... in the first block Ca is set to eight, and the number of loop circuits Rba... in the second block Cb is set to twelve. In Fig. 6, initial setting is made in advance so as to intentionally cause charge and discharge so that the terminal voltages Ea, Eb... of the capacitors Ba... distribute with predetermined scattering, and in this condition, the voltage equalizer 1x shown in Fig. 7 is operated. Thereby, changes of the terminal voltages Ea, Eb...of the capacitors Ba... along with time elapse can be obtained. Fig. 6 shows that voltage equalization is effectively carried out even by the voltage equalizer 1x of Fig. 7. In Fig. 7, the symbols 3aa... 3an and 3ba, 3bb... 3bm denote switching elements, and 2aa... 2an and 2ba, 2bb... 2bm denote coils, respectively. In addition, in Fig. 7, the same portions as in Fig. 1 are attached with the same symbols to make the construction clear, and detailed description of these is omitted.

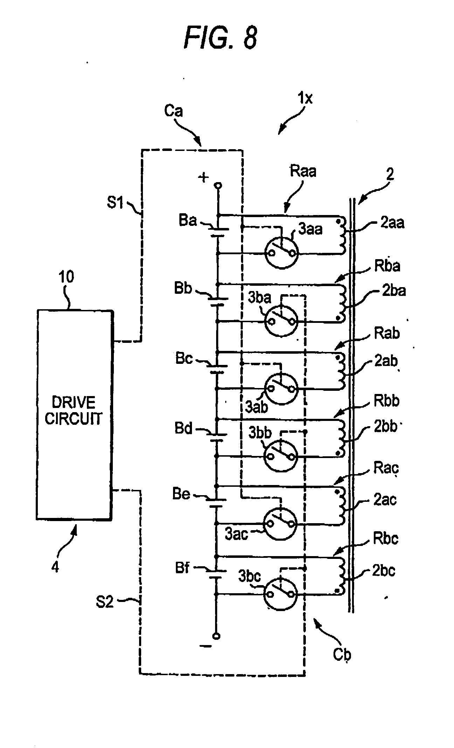

On the other hand, the modified example shown in Fig. 8 shows, in particular, a case where the plurality of capacitors Ba... at arbitrary connect positions are included in one of the blocks Ca... although the point where the two blocks Ca and Cb are provided is the same as in the voltage equalizer 1x shown in Fig. 1. Namely, the capacitors Ba... of each of the blocks Ca... are not necessarily continuously connected in series, and may be positioned at arbitrary connect positions. Fig. 8 shows an example in which, among the six capacitors Ba... connected in series, every other capacitor Ba, Bc, and Be are included in the first block Ca, and the remaining capacitors Bb, Bd, and Bf are included in the second block Cb. In Fig. 8, the symbols 3aa, 3ab, 3ac, 3ba, 3bb, and 3bc denote switching elements, respectively, and the symbols 2aa, 2ab, 2ac, 2ba, 2bb, and 2bc denote coils, respectively. In addition, in Fig. 8, the same portions as in Fig. 1 are attachedwith the same symbols to make the construction clear, and detailed description of these is omitted.

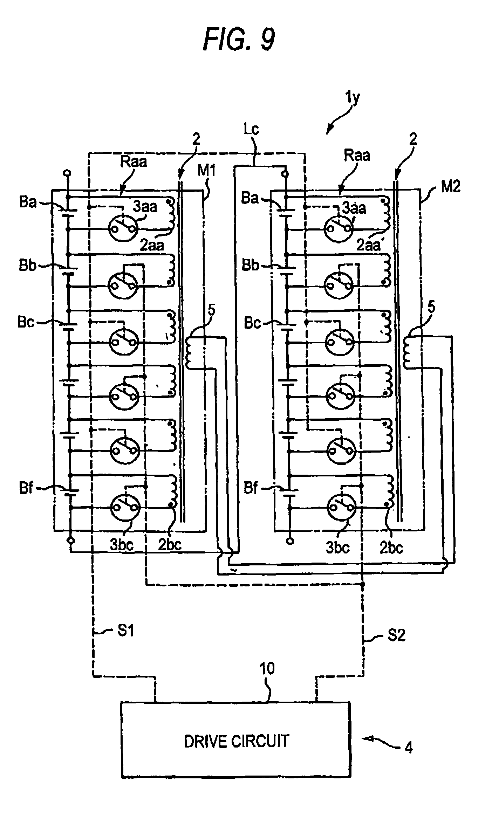

Next, a voltage equalizer 1y relating to the second embodiment of the present invention is described with reference to Fig. 9.

The second embodiment shown in Fig. 9 shows a case where a part of the voltage equalizer 1x shown in Fig. 8 from which the drive circuit 10 is excluded is constructed as one module, and a plurality of modules M1 and M2 are combined to construct the voltage equalizer 1y. Namely, the voltage equalizer 1y comprises two modules M1 and M2 in which transformers 2 having a plurality of coils 2aa... corresponding to respective capacitors Ba... and a plurality of switching elements 3aa... corresponding to the respective coils 2aa... are provided, and the coils 2aa..., the switching 3aa..., and the capacitors Ba... are connected in series to each other to form a plurality of loop circuits Raa..., and the loop circuits Raa... are divided into a plurality of blocks Ca, Cb... each including an arbitrary number of loop circuits Raa.... The capacitors Ba... of the respective modules M1... are connected in series to each other by a line Lc, and the transformers 2... of the modules M1... are provided with equalizing coils 5... so that the equalizing coils 5... are connected in parallel to each other. Even in this case, voltage equalization among the capacitors Ba... can be basically carried out in the same manner as in the first embodiment shown in Fig. 1. In the second embodiment, the drive circuit 10 can be commonly used for the plurality of modules M1 M2..., and the number of the modules M1, M2... can be arbitrarily combined, and these are advantageous in terms of cost, adaptability, and versatility. In addition, in Fig. 9, the same portions as in Fig. 8 (Fig. 1) are attached with the same symbols to make the construction clear, and detailed description of these is omitted.

In the abovementioned voltage equalizers 1x... and ly relating to the examples, the control unit 4 is provided which collectively controls the switching elements 3aa... of the respective blocks Ca... to be ON by a block Ca... basis by selectively supplying pulse signals S1.... of different timings to the plurality of divided blocks Ca..., and is set so that the polarities of the coils 2aa... of the blocks Ca... alternately reverse, so that problems which cause an increase in the size of the transformer 2 orrequire a separate measure to be taken for the one-directional magnetizing force of the transformer 2 can be eliminated. Furthermore, since the coils 2aa..., the switching elements 3aa..., and the capacitors Ba... are connected in series to form a plurality of loop circuits Raa..., cost reduction along with reduction in the number of parts and simplification and downsizing of the voltage equalizer are realized.

The examples are described in detail above, however, the present invention is not limited to these examples, and arbitrary changes, additions, and omissions in the detailed circuitry and method, etc., without deviation from the spirit of the present invention are possible. For example, although the FETs 30 are illustrated as the switching elements 3aa..., they can be replaced with other switching elements having the same functions such as transistors. Furthermore, the capacitors Ba... are preferably used for a battery B to be loaded into an electric vehicle that runs by a motor or a hybrid vehicle that runs by using both engine andmotor, however, the use of the present invention is not limited to these.

This application is based on Japanese Patent Application No. 2003-118657, filed on April 23, 2003, the content of which is incorporated herein by reference.

As mentioned above, in the voltage equalizer relating to the present invention, a transformer having a plurality of coils corresponding to capacitors and a plurality of switching elements corresponding to the coils are provided so that the coils, the switching elements, and the capacitors are connected in series to each other to form a plurality of loop circuits, the loop circuits is divided into a plurality of blocks each including an arbitrary number of loop circuits, and a control unit is also provided to collectively control the switching elements of the respective blocks to be ON by a block basis by selectively supplying pulse signals of different timings to the respective blocks, and make settings or controls so that the polarities of the coils of the respective blocks alternately reverse. Therefore, the voltage equalizer of the present invention has the following great effects.
(1) The switching elements of each block are collectively controlled to be ON by a block basis by selectively supplying pulse signals of different timings to each of the plurality of divided blocks, and setting or controlling is made so that the polarities of the coils of the respective blocks alternately reverse. Therefore, problems which cause an increase in size of the transformer or require a separate measure to be taken for the one-directional magnetizing force of the transformer can be eliminated.
(2) Since the coils, the switching elements, and the capacitors are connected in series to each other to form a plurality of loop circuits, cost reduction along with reduction in the number of parts and in addition, simplification and downsizing of the voltage equalizer are realized.
(3) According to the preferred embodiment, in order to make the polarities of the coils alternately reverse, the coils are connected in advance so that the polarities of corresponding coils are reverse to each other, whereby control using a polarity switching circuit, etc., becomes unnecessary, and accordingly, the present invention is carried out easily at low cost.
(4) According to the preferred embodiment, a plurality of modules including a plurality of blocks are formed, the capacitors of the modules are connected in series, and equalizing coils are provided in the transformers of the respective modules so that the equalizing coils are connected in parallel to each other. Therefore, the control unit can be commonly used for the plurality of modules, and in addition, the number of the modules can be arbitrarily combined, and this has an advantage in terms of cost, adaptability, and versatility.

## Claims

1. A voltage equalizer for capacitors which equalizes terminal voltages of a plurality of capacitors connected in series, comprising:
a transformer having a plurality of coils corresponding to the capacitors;
a plurality of switching elements corresponding to the coils, wherein the coils, the switching elements, and the capacitors are connected in series to each other to form a plurality of loop circuits, the loop circuits are divided into a plurality of blocks each including an arbitrary number of loop circuits; and
a control unit collectively controlling the switching elements of the respective blocks to be ON by a block basis by selectively supplying pulse signals of different timings to the respective blocks and makings settings or controls so that polarities of the coils of the blocks alternately reverse.

2. The voltage equalizer for capacitors according to Claim 1, wherein the coils are connected so that the polarities of corresponding coils are in reverse to each other.

3. The voltage equalizer for capacitors according to Claim 1, wherein in a case where terminal voltages of capacitors of a block having switching elements to be controlled to be ON n-th are defined as Eₙ, the number of windings of the corresponding coils is defined as Nₙ, an ON time of the switching element is defined as Tₙ, terminal voltages of the capacitors of a block having sswitching elements to be controlled to be ON n+1-th are defined as Eₙ₊₁, the number of windings of the corresponding coils is defined as Nₙ₊₁, and an ON time of the switching element is defined as Tₙ₊₁, a condition of Eₙ/Eₙ₊₁ = (Nₙ/Nₙ₊₁) · (Tₙ₊₁/Tₙ) is satisfied.

4. The voltage equalizer for capacitors according to Claim 1, wherein the control unit monitors terminal voltages of the capacitors, and when scattering of the terminal voltages falls within a predetermined range, the control unit controls to stop ON-control of the switching elements or shortens an ON time.

5. The voltage equalizer for capacitors according to Claim 1, wherein the control unit monitors currents flowing in the capacitors, and when currents equal to or more than a predetermined value flow in the capacitors, the control unit stops ON-control of the switching elements or shortens an ON time.

6. The voltage equalizer for capacitors according to Claim 1, wherein each capacitor comprises one cell or a plurality of cells.

7. The voltage equalizer for capacitors according to Claim 1, further comprising:
a plurality of modules each having a transformer with a plurality of coils corresponding to capacitors and a plurality of switching elements corresponding to the coils, wherein the coils, the switching elements, and the capacitors are connected in series to each other to form a plurality of loop circuits, the loop circuits are divided into a plurality of blocks each including an arbitrary number of loop circuits,
wherein the capacitors of the respective modules are connected in series, and the transformers of the respective modules have equalizing coils respectively so that the equalizing coils are connected in parallel to each other.

8. The voltage equalizer for capacitors according to Claim 1, wherein the capacitors are used for a battery to be loaded into an electric vehicle which runs by a motor or a hybrid vehicle which runs by using both engine and motor.

9. The voltage equalizer for capacitors according to Claim 6, wherein the capacitors are used for a battery to be loaded into an electric vehicle which runs by a motor or a hybrid vehicle which runs by using both engine and motor.

10. The voltage equalizer for capacitors according to Claim 7, wherein the capacitors are used for a battery to be loaded into an electric vehicle which runs by a motor or a hybrid vehicle which runs by using both engine and motor.
